# EUROPÄISCHE PATENTSCHRIFT

(11) **EP 0 893 414 B1**
(45) Veröffentlichungstag und Bekanntmachung des Hinweises auf die Patenterteilung: **29.03.2000**
(21) Anmeldenummer: 97111921.9
(22) Anmeldetag: 14.07.1997
(51) Int. Cl.: C03B 7/06, C03B 5/24, F27B 3/22, F27D 23/00, F23D 14/32

(54) **Verfahren und Vorrichtung zur Bestimmung und Regelung des Sauerstoffgehalts in der Ofenatmosphäre eines Glasfeeders**
Method and apparatus for determining and regulating the oxygen contents in the atmosphere above the glass in a feeder channel
Procédé et dispositif de détermination et de réglage de la teneur d'oxygène dans l'atmosphere au-dessus du verre dans un canal d'écoulement pour le transfert de verre en fusion

(43) Veröffentlichungstag der Anmeldung: 27.01.1999
(73) Patentinhaber: Vieler, Ernst, 61197 Florstadt (DE)
(72) Erfinder: Vieler, Ernst, 61197 Florstadt (DE)
(74) Vertreter: Böck, Bernhard, Dipl.-Ing.

(56) Entgegenhaltungen:
- EP-A- 0 216 698

## Beschreibung

Die vorliegende Erfindung betrifft ein Verfahren und eine Vorrichtung zur Bestimmung des Sauerstoffgehalts in der Ofenatmosphäre eines mit Gasbrennern beheizten Glasfeeders und ein Verfahren zur Regelung des Sauerstoffgehalts in der Ofenatmosphäre eines mit Gasbrennern beheizten Glasfeeders wobei Verbrennungsgas einem Verbrennungsluftstrom mittels eines Druckreglers in einer vom Druck im Verbrennungsluftstrom abhängigen Menge zugemischt wird.

Sog. "Glasfeeder" dienen als Glaszuführeinrichtungen für eine Vorrichtung zur Glasformung und umfassen im wesentlichen eine Feederrinne zur Aufnahme eines beheizten Glasbades. Zur Beheizung des Glasbades sind in Längsrichtung der Feederrinne, beidseitig des Glasbades angeordnet, eine Vielzahl von Gasbrennern vorgesehen, die mit einem Gasgemisch aus atmosphärischer Luft und einem Verbrennungsgas betrieben werden. Für die Qualität der in der dem Glasfeeder nachfolgend angeordneten Formeinrichtung hergestellten Glasformteile hat sich die Temperatur des Glasbades und der Sauerstoffgehalt in der Ofenatmosphäre des Glasfeeders als wesentlich herausgestellt. Der in der Ofenatmosphäre nach Verbrennung des Verbrennungsgasgemisches verbleibende Sauerstoffgehalt ist abhängig vom Sauerstoffgehalt des den Gasbrennern des Glasfeeders zugeleiteten Verbrennungsgasgemisches. Zur Gemischregelung werden bislang Verfahren eingesetzt, mit denen ein Verbrennungsgasgemisch bereitgestellt wird, das lediglich auf einen Arbeitspunkt des Glasfeeders ausgelegt ist. Eine kontinuierliche Überwachung des Sauerstoffgehalts nach erfolgter Verbrennung des Verbrennungsgasgemisches im Glasfeeder ist basierend auf den bekannten Verfahren nicht möglich. Auch erfolgt keine Weiterverarbeitung des Sauerstoffgehalts nach der Verbrennung. Insbesondere aufgrund der bei den bekannten Verfahren fehlenden Überwachung des in der Ofenatmosphäre verbleibenden Sauerstoffgehalts ist es nicht möglich, die Auswirkungen von Betriebsstörungen beim Betrieb des Glasfeeders und damit verbundene Änderungen des Sauerstoffgehalts festzustellen. Fehler in der Gemischzusammenstellung werden dadurch erst durch entsprechende Qualitätsmängel am Glasformprodukt erkennbar.

Der vorliegenden Erfindung liegt die Aufgabe zugrunde, eine genaue Bestimmung des Sauerstoffgehalts in der Ofenatmosphäre eines Glasfeeders kontinuierlich zu ermöglichen, und um in Abhängigkeit vom tatsächlichen Sauerstoffgehalt Gemischeinstellungen vornehmen zu können.

Diese Aufgabe wird gelöst durch ein Verfahren mit den Merkmalen der Ansprüche 1 oder 2, bzw. durch eine Vorrichtung mit den Merkmalen des Anspruchs 3.

Bei dem erfindungsgemäßen Verfahren nach Anspruch 1, das zur Bestimmung des Sauerstoffgehalts in der Ofenatmosphäre eines mit Gasbrennern beheizten Glasfeeders dient, erfolgt zunächst die Entnahme einer minimalen Teilmenge aus einem den Gasbrennern Verbrennungsgas und Verbrennungsluft zuführenden Verbrennungsgemischstrom und anschließender Verbrennung der Teilmenge in einem vom Glasfeeder unabhängigen Referenzofen mit Ermittlung des Sauerstoffgehalts im Rauchgas des Referenzofens als Referenzwert für den Sauerstoffgehalt in der Ofenatmosphäre des Glasfeeders mittels einer Sauerstoffsonde.

Das erfindungsgemäße Verfahren ermöglicht somit eine kontinuierliche Überwachung des nach Verbrennung des Verbrennungsgasgemisches verbleibenden Sauerstoffgehalts. Somit läßt sich der nach der Verbrennung verbleibende Sauerstoffgehalt lediglich in Abhängigkeit von der Gemischeinstellung des Verbrennungsgasgemisches bestimmen, wodurch in Kenntnis des tatsächlichen Sauerstoffgehalts eine Änderung der Gemischeinstellung jederzeit möglich ist, um einen gewünschten Sauerstoffgehalt im Rauchgas des Referenzofens bzw. in der Ofenatmosphäre des Glasfeeders zu erreichen. Gemischeinstellungen werden somit exakt reproduzierbar. Änderungen in der Gemischeinstellung, die sich auf den nach der Verbrennung verbleibenden Sauerstoffgehalt auswirken, werden somit sofort erfaßbar, so daß durch eine entsprechende Änderung der Gemischzusammensetzung wieder der gewünschte Sauerstoffgehalt im Rauchgas einstellbar ist.

Bei demerfindungsgemäßen Verfahren nach Anspruch 2 dient der durch die Bestimmung des Sauerstoffgehalts im Referenzofen ermittelte Referenzwert für den Sauerstoffgehalt in der Ofenatmosphäre des Glasfeeders als Referenzwert für eine nachfolgende Regelung der Gemischeinstellung. Hierbei wird Verbrennungsgas einem Verbrennungsluftstrom mittels eines Druckreglers in einer vom Druck im Verbrennungsluftstrom abhängigen Menge zugemischt, wobei der Druckregler so eingestellt ist, daß ein geringer Verbrennungsgasüberschuß vorliegt. Nach Entnahme einer minimalen Teilmenge aus einem den Gasbrennern Verbrennungsgas und Verbrennungsluft zuführenden Verbrennungsgemischstrom erfolgt die Verbrennung der Teilmenge in einem vom Glasfeeder unabhängigen Referenzofen mit Ermittlung des Sauerstoffgehalts im Rauchgas des Referenzofens als Referenzwert für den Sauerstoffgehalt in der Ofenatmosphäre des Glasfeeders mittels einer Sauerstoffsonde. Anschließend erfolgt die Eingabe des Referenzwerts als Ist-Wert in eine Sauerstoff-Regeleinrichtung zur Erzeugung einer Stellgröße, die auf ein nachfolgend dem Druckregler im Verbrennungsgasstrom angeordnetes Stellventil wirkt, derart, daß das Stellventil gedrosselt wird bis der gewünschte Sauerstoffgehalt im Rauchgas des Referenzofens erreicht wird.

Die exakte Bestimmung des Sauerstoffgehalts im Rauchgas des Referenzofens ermöglicht es, das Verbrennungsgasgemisch entsprechend auszuregeln. Prinzipiell ist damit bei jeder Gemischverbrennung Energie einzusparen. Da bestimmte Glasformprodukte nur bei Einhaltung eines definierten Sauerstoffgehalts im Rauchgas herstellbar sind, ermöglicht die vorstehende Gemischregelung eine Herstellung von Glasformprodukten definierter Qualität. Somit wird auch die reproduzierbare Herstellung solcher Glasformprodukte möglich, die bislang an den zu ungenauen Überwachungs- bzw. Regelungsmöglichkeiten der Gemischeinstellung gescheitert ist. Die vorstehende Bestimmung des Sauerstoffgehalts mit anschließender Gemischregelung zur Erzielung eines gewünschten Sauerstoffgehalts im Rauchgas ermöglicht auch die Kompensation von Heizwertänderungen im Frischgas und Temperaturänderungen der Verbrennungsluft.

Die erfindungsgemäße Vorrichtung zur Bestimmung des Sauerstoffgehalts in der Ofenatmosphäre eines mit Gasbrennern beheizten Glasfeeders weist eine Entnahmeeinrichtung zur Entnahme einer minimalen Teilmenge aus einem den Gasbrennern Verbrennungsgas und Verbrennungsluft zuführenden Verbrennungsgemischstrom auf, einen an die Entnahmeeinrichtung angeschlossenen Referenzofen zur Verbrennung der Teilmenge und eine Sauerstoffsonde zur Ermittlung des Sauerstoffgehalts im Rauchgas des Referenzofens als Referenzwert für den Sauerstoffgehalt in der Ofenatmosphäre des Glasfeeders.

Als besonders vorteilhaft hat es sich herausgestellt, die Sauerstoffsonde als Zirconoxyd-Sonde auszubilden.

Weiterhin erweist es sich als vorteilhaft, den Referenzofen mit einer atmosphärischen Gasbrennereinrichtung mit Ionisationsüberwachung zu versehen.

Wenn die zum Referenzofen führende Entnahmeeinrichtung über ein Kugelhahn an eine Verbrennungsgemischzuleitung für den Glasfeeder angeschlossen ist, ist eine Trennstelle vorgesehen, so daß ein Betrieb des Glasfeeders auch unabhängig vom Betrieb der Vorrichtung zur Bestimmung des Sauerstoffgehalts möglich ist.

Wenn die Sauerstoffsonde über einen Meßumformer an eine Anzeigeeinrichtung zur Anzeige des Meßsignals der Sauerstoffsonde als Sauerstoffgehalt angeschlossen ist, ist eine unmittelbare kontinuierliche Visualisierung des aktuellen Sauerstoffgehalts mit den sich daraus ergebenden Überwachungsmöglichkeiten gegeben.

Wenn die Sauerstoffsonde über eine Regeleinrichtung an ein Stellventil angeschlossen ist, das in Strömungsrichtung nachgeordnet einem Druckregler in einer in die Verbrennungsgemischzuleitung einmündenden Verbrennungsgaszuleitung angeordnet ist, läßt sich der durch die Vorrichtung bestimmte Sauerstoffgehalt jederzeit als Referenzwert für eine Gemischregelung mit der Folge der Einstellung eines gewünschten Sauerstoffgehalts im Rauchgas des Referenzofens einsetzen.

Nachfolgend wird eine Variante des erfindungsgemäßen Verfahrens unter Bezugnahme auf eine Ausführungsform der erfindungsgemäßen Vorrichtung anhand der Zeichnungen näher erläutert. Es zeigen:
- **Fig. 1**: eine Vorrichtung zur Bestimmung des Sauerstoffgehalts;
- **Fig. 2**: eine Vorrichtung zur Gemischregelung in Abhängigkeit vom Sauerstoffgehalt.

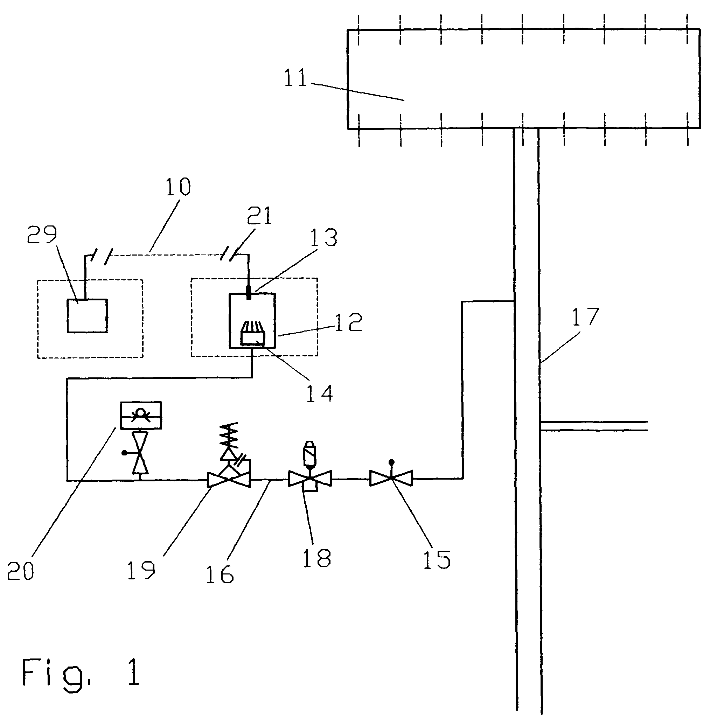

**Fig. 1** zeigt eine Sauerstoffmeßvorrichtung 10 zur Bestimmung eines Referenzwertes für den Sauerstoffgehalt in der Ofenatmosphäre eines in **Fig. 1** durch strichpunktierten Linienverlauf angedeuteten Glasfeeder 11. Die Sauerstoff-Meßvorrichtung 10 umfaßt in dem in **Fig. 1** dargestellten Ausführungsbeispiel einen Referenzofen 12, der mit einer Sauerstoffsonde 13 zur Bestimmung des Sauerstoffgehalts in der Ofenatmosphäre bzw. im Rauchgas des Referenzofens 12 versehen ist.

Wie **Fig. 1** zeigt, ist eine im Referenzofen 12 vorgesehende Gasbrennereinrichtung 14 über eine mit einem Kugelhahn 15 versehene Verbrennungsgemischzuleitung 16 mit einer Verbrennungsgemischzuleitung 17 für den Glasfeeder 11 verbunden. Über die Verbrennungsgemischzuleitung 16 wird die Entnahme einer Teilmenge des in der Verbrennungsgemischzuleitung 17 dem Glasfeeder zugeführten Verbrennungsgasgemisches und Einspeisung dieser Teilmenge in die Gasbrennereinrichtung 14 des Referenzofens 12 ermöglicht. Zwischen dem Absperrventil 15 und dem Referenzofen 12 befinden sich in der in **Fig. 1** dargestellten Ausführungsform der Sauerstoff-Meßvorrichtung 10 weitere Ventileinrichtungen, wie ein Magnetventil 18, ein Gasdruckregler 19 und ein Druckwächter 20, die in an sich bekannter Weise zur drucktechnischen Absicherung bzw. zur Einstellung eines definierten Betriebsdruckes für den Betrieb der Gasbrennereinrichtung 14 dienen. Zur Anzeige des mittels der Sauerstoffsonde 13 im Referenzofen 12 ermittelten Sauerstoffgehalts ist die Sauerstoffsonde 13 mit einem Meßumformer 29 verbunden, der über eine Anzeigeeinrichtung verfügt.

Aufgrund der unmittelbaren Entnahme des Verbrennungsgasgemisches für den Betrieb der Gasbrennereinrichtung 14 des Referenzofens 12 aus der zur Versorgung des Glasfeeder 11 dienenden Verbrennungsgemischzuleitung 17 läßt sich über die Sauerstoffsonde 13 im Referenzofen 12 der Sauerstoffgehalt bestimmen, der auch aufgrund der Zusammensetzung des Verbrennungsgemisches im Glasfeeder 11 nach Verbrennung des Verbrennungsgemisches gegeben ist. Mithin kann der in der Ofenatmosphäre bzw. im Rauchgas des Referenzofens 12 bestimmte Sauerstoffgehalt als Referenzwert für den tatsächlich in der Ofenatmosphäre des Glasfeeder 11 gegebenen Sauerstoffgehalt dienen.

Zur Verwendung als Sauerstoffsonde 13 ist bei dem in **Fig. 1** dargestellten Ausführungsbeispiel eine Zirconoxyd-Sonde vorgesehen, die eingebaut in einem Meßflansch aus VA-Stahl am vorzugsweise aus Stahl gefertigten Gehäuse des Referenzofens, der im übrigen mit einer feuerfesten Auskleidung versehen ist, montiert ist.

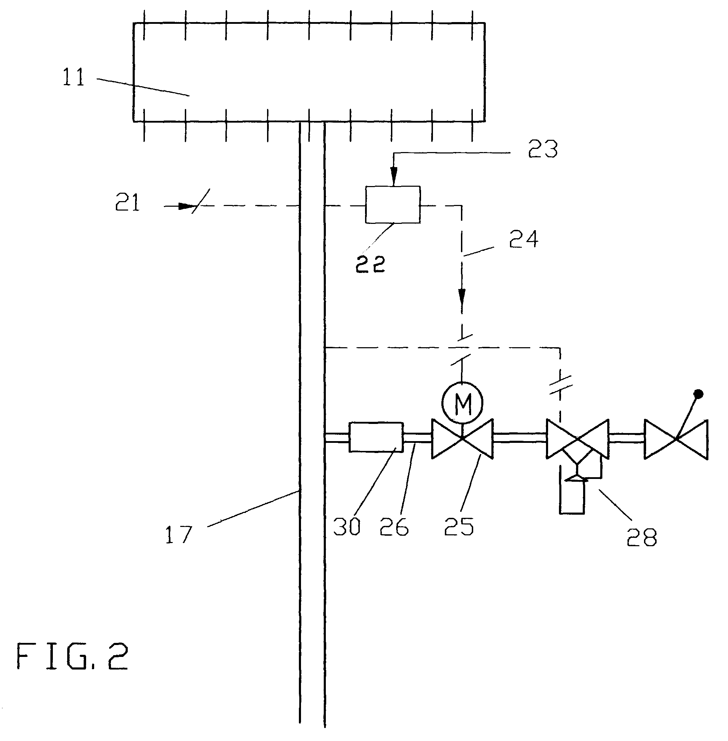

**Fig. 2** zeigt eine Regelvorrichtung um ausgehend von den mittels der in **Fig. 1** dargestellten Sauerstoff-Meßvorrichtung 10, die einen Referenzwert 21 für den Sauerstoffgehalt in der Ofenatmosphäre des Glasfeeder 11 liefert mittels einer Regelung die Einstellung des gewünschten Sauerstoffgehalts in der Ofenatmosphäre des Galsfeeder ermöglicht.

Hierzu wird, wie in **Fig. 2** dargestellt, der Referenzwert 21 als Ist-Wert in einen Regler 22 eingegeben. Als weitere Eingangsgröße für den Regler 22 dient ein Soll-Wert 23, der für den gewünschten Sauerstoffgehalt im Glasfeeder 11 steht. Der Regler 22 liefert als Ausgangsgröße einen Stellwert 24, der auf ein hier als Servoventil ausgeführtes Stellventil 25 gegeben wird, das in der Funktion eines Stromventils in eine Verbrennungsgaszuleitung 26 eingesetzt ist, die in eine Verbrennungsluftzuleitung 27 mündet. Ab der Einmündung der Verbrennungsgaszuleitung 26 geht die Verbrennungsluftzuleitung 27 über in die Verbrennungsgemischzuleitung 17, die - wie bereits unter Bezugnahme auf **Fig. 1** erläutert - zur Versorgung des Glasfeeder 11 dient. Zwischen dem Stellventil 25 und der Einmündung der Verbrennungsgaszuleitung 26 in die Verbrennungsgemischzuleitung 17 ist eine Gasrücktrittssicherung 30 vorgesehen.

Das durch die Verbrennungsgaszuleitung 26 der Verbrennungsluftzuleitung 27 zuströmende Verbrennungsgas wird bedingt durch eine entsprechende Einstellung eines dem Stellventil 25 vorgeordneten Gleichdruckreglers 28 mit gegenüber der letztendlich gewünschten Gemischzusammensetzung leichtem Volumenüberschuß dem Stellventil 25 zugeführt.

Hierdurch kann die Einstellung des Sauerstoffgehalts des dem Glasfeeder 11 zugeführten Verbrennungsgasgemisches durch eine Drosselung des Stellventils 25 eingestellt werden. Aufgrund der Funktion des Reglers 22 erfolgt die Drosselung des Stellventils 25 so lange, bis der als Soll-Wert 23 in den Regler 22 eingegebene, gewünschte Sauerstoffgehalt der Ofenatmosphäre des Glasfeeders 11 als Referenzwert 21 im Rauchgas des Referenzofens 12 erreicht wird.

## Patentansprüche

1. Verfahren zur Bestimmung des Sauerstoffgehalts in der Ofenatmosphäre eines mit Gasbrennern beheizten Glasfeeders,
**gekennzeichnet** durch
Entnahme einer minimalen Teilmenge aus einem den Gasbrennern des Glasfeeders (11) Verbrennungsgas und Verbrennungsluft zuführenden Verbrennungsgemischstrom,
Verbrennung der Teilmenge in einem vom Glasfeeder (11) unabhängigen Referenzofen (12), und
Ermittlung des Sauerstoffgehalts im Rauchgas des Referenzofens (12) als Referenzwert (21) für den Sauerstoffgehalt in der Ofenatmosphäre des Glasfeeders (11) mittels einer Sauerstoffsonde (13).

2. Verfahren zur Regelung des Sauerstoffgehalts in der Ofenatmosphäre eines mit Gasbrennern beheizten Glasfeeders, wobei Verbrennungsgas einem Verbrennungsluftstrom mittels eines Druckreglers in einer vom Druck im Verbrennungsluftstrom abhängigen Menge zugemischt wird, **gekennzeichnet** durch
Einstellung des Druckreglers derart, daß ein gegenüber der gewünschten Verbrennungsgemischeinstellung geringer Verbrennungsgasüberschuß gegeben ist,
Entnahme einer minimalen Teilmenge aus einem den Gasbrennern des Glasfeeders (11) Verbrennungsgas und Verbrennungsluft zuführenden Verbrennungsgemischstroms,
Verbrennung der Teilmenge in einem vom Glasfeeder (11) unabhängigen Referenzofen (12),
Ermittlung des Sauerstoffgehalts im Rauchgas des Referenzofens (12) als Referenzwert (21) für den Sauerstoffgehalt in der Ofenatmosphäre des Glasfeeders (11) mittels einer Sauerstoffsonde (13), und
Eingabe des Referenzwertes (21) als Ist-Wert in eine Sauerstoff-Regeleinrichtung (22) zur Erzeugung eines Stellwertes (24) der auf ein nachfolgend dem Druckregler (28) im Verbrennungsgasstrom angeordnetes Stellventil (25) wirkt, derart, daß das Stellventil (25) gedrosselt wird bis der als Soll-Wert in die Sauerstoff-Regeleinrichtung eingegebene Sauerstoffgehalt als Referenzwert (21) im Rauchgas des Referenzofens (12) erreicht wird.

3. Vorrichtung zur Bestimmung des Sauerstoffgehalts in der Ofenatmosphäre eines mit Gasbrennern beheizten Glasfeeders,
**gekennzeichnet** durch:
eine Entnahmeeinrichtung (16) zur Entnahme einer minimalen Teilmenge aus einem den Gasbrennern des Glasfeeders (11) Verbrennungsgas und Verbrennungluft zuführenden Verbrennungsgemischstrom,
einen an die Entnahmeeinrichtung (16) angeschlossenen Referenzofen (12) zur Verbrennung der Teilmenge und
eine Sauerstoffsonde (13) zur Ermittlung des Sauerstoffgehalts im Rauchgas des Referenzofens (12) als Referenzwert (21) für den Sauerstoffgehalt in der Ofenatmosphäre des Glasfeeders (11).

4. Vorrichtung nach Anspruch 3,
dadurch **gekennzeichnet**,
daß die Sauerstoffsonde (13) als eine Zirconoxyd-Sonde ausgebildet ist.

5. Vorrichtung nach Anspruch 3 oder 4,
dadurch **gekennzeichnet**,
daß der Referenzofen (12) mit einer atmosphärischen Gasbrennereinrichtung (14) mit Ionisationsüberwachung versehen ist.

6. Vorrichtung nach einem der Ansprüche 3 bis 5,
dadurch **gekennzeichnet**,
daß die zum Referenzofen (12) führende Entnahmeeinrichtung (16) über ein Kugelhahn (15) an eine Verbrennungsgemischzuleitung (17) für den Glasfeeder (11) angeschlossen ist.

7. Vorrichtung nach einem der Ansprüche 3 bis 6,
dadurch **gekennzeichnet**,
daß die Sauerstoffsonde (13) über einen Meßumformer (29) an eine Anzeigeeinrichtung zur Anzeige des Meßsignals der Sauerstoffsonde (13) als Sauerstoffgehalt angeschlossen ist.

8. Vorrichtung nach einem der Ansprüche 3 bis 7,
dadurch **gekennzeichnet**,
daß die Sauerstoffsonde (13) über eine Regeleinrichtung (22) an ein Stellventil (25) angeschlossen ist, das in Strömungsrichtung nachgeordnet einem Druckregler (28) in einer in die Verbrennungsgemischzuleitung (17) einmündenden Verbrennungsgaszuleitung (26) angeordnet ist.

## Claims

1. Method for determining the oxygen content in the furnace atmosphere of a glass feeder heated with gas burners,
characterised by
withdrawing a minimum partial quantity from a combustion mixture stream supplying combustion gas and combustion air to the gas burners of the glass feeder (11),
burning the partial quantity in a reference furnace (12) which is independent of the glass feeder (11), and
determining the oxygen content in the flue gas of the reference furnace (12) as reference value (21) for the oxygen content in the furnace atmosphere of the glass feeder (11) by means of an oxygen probe (13).

2. Method for regulating the oxygen content in the furnace atmosphere of a glass feeder heated with gas burners,
wherein combustion gas is admixed with a combustion air stream by means of a pressure regulator in a quantity which is dependent on the pressure in the combustion air stream,
characterised by
setting the pressure regulator so as to obtain a combustion gas excess which is less than the desired combustion mixture setting,
withdrawing a minimum partial quantity from a combustion mixture stream supplying combustion gas and combustion air to the gas burners of the glass feeder (11),
burning the partial quantity in a reference furnace (12) which is independent of the glass feeder (11), determining the oxygen content in the flue gas of the reference furnace (12) as reference value (21) for the oxygen content in the furnace atmosphere of the glass feeder (11) by means of an oxygen probe (13), and
inputting the reference value (21) as actual value into an oxygen regulating device (22) for producing a control value (24) which acts on a control valve (25), disposed downstream of the pressure regulator (28) in the combustion gas stream, such that the control valve (25) is throttled until the oxygen content which is input as desired value into the oxygen regulating device is achieved as reference value (21) in the flue gas of the reference furnace (12).

3. Apparatus for determining the oxygen content in the furnace atmosphere of a glass feeder heated with gas burners,
characterised by:
a withdrawal device (16) for withdrawing a minimum partial quantity from a combustion mixture stream supplying combustion gas and combustion air to the gas burners of the glass feeder (11),
a reference furnace (12) connected to the withdrawal device (16) for burning the partial quantity and an oxygen probe (13) for determining the oxygen content in the flue gas of the reference furnace (12) as reference value (21) for the oxygen content in the furnace atmosphere of the glass feeder (11).

4. Apparatus according to claim 3,
characterised in that the oxygen probe (13) is formed as a zirconium oxide probe.

5. Apparatus according to claim 3 or 4,
characterised in that the reference furnace (12) is provided with an atmospheric gas burner device (14) with ionisation monitoring.

6. Apparatus according to any one of claims 3 to 5,
characterised in that the withdrawal device (16) leading to the reference furnace (12) is connected via a ball valve (15) to a combustion mixture feed line (17) for the glass feeder (11).

7. Apparatus according to any one of claims 3 to 6,
characterised in that the oxygen probe (13) is connected via a measurement transducer (29) to a display device for displaying the measurement signal of the oxygen probe (13) as oxygen content.

8. Apparatus according to any one of claims 3 to 7,
characterised in that the oxygen probe (13) is connected via a regulating device (22) to a control valve (25) disposed downstream of a pressure regulator (28) in the flow direction in a combustion gas feed line (26) opening into the combustion mixture feed line (17).

## Revendications

1. Procédé de détermination de la teneur en oxygène de l'atmosphère au-dessus du verre dans un canal d'écoulement pour le transfert de verre en fusion chauffé par des brûleurs à gaz, caractérisé par
le prélèvement d'une fraction minimale dans un courant de mélange de combustion amenant du gaz de combustion et de l'air de combustion aux brûleurs à gaz du canal d'écoulement pour le transfert de verre en fusion (11),
la combustion de la fraction prélevée dans un four de référence (12) indépendant du canal d'écoulement pour le transfert de verre en fusion (11), et
la détermination de la teneur en oxygène dans les gaz de fumées du four de référence (12) en tant que valeur de référence (21) pour la teneur en oxygène de l'atmosphère au-dessus du verre du canal d'écoulement pour le transfert de verre en fusion (11), au moyen d'une sonde à oxygène (13).

2. Procédé pour la régulation de la teneur en oxygène de l'atmosphère au-dessus du verre d'un canal d'écoulement pour le transfert de verre en fusion chauffé par des brûleurs à gaz, dans lequel le gaz de combustion est mélangé à un courant d'air de combustion, via un pressostat et en une quantité dépendant de la pression dans le courant d'air de combustion, caractérisé par:
un réglage du pressostat de manière que soit amené un léger excès de gaz de combustion par rapport aux proportions souhaitées de mélange de combustion,
le prélèvement d'une fraction minimale dans un mélange de combustion amenant le gaz de combustion et l'air de combustion aux brûleurs à gaz du canal d'écoulement pour le transfert de verre en fusion (11),
la combustion de ladite fraction dans un four de référence (12) indépendant du canal d'écoulement pour le transfert de verre en fusion (11),
la détermination de la teneur en oxygène dans les gaz de fumées du four de référence (12) en tant que valeur de référence (21) de la teneur en oxygène de l'atmosphère au-dessus du verre du canal d'écoulement pour le transfert de verre en fusion (11) au moyen d'une sonde à oxygène (13), et l'introduction de la valeur de référence (21) en tant que valeur réelle dans une installation de régulation d'oxygène (22) afin de générer une valeur de consigne (24) agissant sur une vanne de réglage (25) placée dans le courant de gaz de combustion en aval du pressostat (28), de manière que la vanne de réglage (25) soit étranglée jusqu'à ce que soit atteinte la teneur en oxygène spécifiée en tant que valeur de consigne dans le dispositif de régulation d'oxygène en tant que valeur de référence (21) dans les gaz de fumées du four de référence (12).

3. Dispositif de détermination de la teneur en oxygène de l'atmosphère au-dessus du verre d'un canal d'écoulement pour le transfert de verre en fusion chauffé par des brûleurs à gaz, caractérisé par:
un dispositif de prélèvement (16) pour le prélèvement d'une fraction minimale du mélange de combustion amenant le gaz de combustion et l'air de combustion aux brûleurs à gaz du canal d'écoulement pour le transfert de verre en fusion (11),
un four de référence (12) relié au dispositif de prélèvement (16) pour la combustion de la fraction prélevée et
une sonde à oxygène (13) pour la détermination de la teneur en oxygène des gaz de fumées du four de référence (12) en tant que valeur de référence (21) pour la teneur en oxygène de l'atmosphère au-dessus du verre du canal d'écoulement pour le transfert de verre en fusion (11).

4. Dispositif selon la revendication 3, caractérisé en ce que la sonde à oxygène (13) est configurée sous la forme d'une sonde à oxyde de zirconium.

5. Dispositif selon la revendication 3 ou 4, caractérisé en ce que le four de référence (12) est équipé d'un brûleur à gaz atmosphérique (14) avec détection d'ionisation.

6. Dispositif selon l'une des revendications 3 à 5, caractérisé en ce que le dispositif de prélèvement (16) conduisant au four de référence (12) est raccordé à une amenée (17) de mélange de combustion du canal d'écoulement pour le transfert de verre en fusion (11) via un robinet à boisseau sphérique (15).

7. Dispositif selon l'une des revendications 3 à 6, caractérisé en ce que la sonde à oxygène (13) est raccordée via un transducteur de mesure (29) à un dispositif d'affichage pour l'affichage du signal de mesure de la sonde à oxygène (13) en tant que teneur en oxygène

8. Dispositif selon l'une des revendications 3 à 7, caractérisé en ce que la sonde à oxygène (13) est raccordée via un dispositif de régulation (22) à une vanne de réglage (25), qui est coordonnée à une amenée de gaz de combustion (26) débouchant dans une amenée de mélange de combustion (17), coordonnée en sens aval de l'écoulement, à un pressostat (28).
